# FASCICULE DE BREVET EUROPEEN

(11) **EP 1 946 984 B1**
(45) Date de publication et mention de la délivrance du brevet: **23.12.2009**
(21) Numéro de dépôt: 08100483.0
(22) Date de dépôt: 15.01.2008
(51) Int. Cl.: B60T 8/40, B60T 11/20

(54) **Système de freinage à course de pédale réduite**
Bremssystem mit reduziertem Pedalweg
Braking system with reduced pedal travel

(30) Priorité: 18.01.2007 FR 0700354
(43) Date de publication de la demande: 23.07.2008
(73) Titulaire: ROBERT BOSCH GMBH, 70442 Stuttgart (DE)
(72) Inventeur: Quirant, Werner, 71717 Beilstein (DE); Stegmaier, Alwin, 87544 Blaichach (DE); Willmann, Karl-Heinz, 71691 Freiberg (DE); Anderson, Chris, 75002 Paris (FR); Brodbeck, Frank, 74354 Besigheim (DE); Kaestner, Frank, 74321 Bietigheim-Bissingen (DE); Baur, Gerd, 74369 Loechgau (DE)
(74) Mandataire: Hurwic, Aleksander Wiktor

(56) Documents cités:
- WO-A-03/047936
- DE-A1-102004 023 007
- FR-A- 2 620 990

## Description

L'invention se rapporte à un système de freinage pour un véhicule automobile.

L'invention se rapporte plus particulièrement à un système de freinage pour un véhicule automobile, comprenant un maître-cylindre comportant un corps sensiblement axial à l'intérieur d'un alésage duquel sont montés coulissants deux pistons axiaux primaire et secondaire qui sont susceptibles d'être actionnés par une tige de commande liée à une pédale mue par un conducteur du véhicule entre une position arrière de repos et une position avant d'application d'un effort de freinage, et qui sont rappelés élastiquement vers leur position arrière de repos, l'alésage comportant deux joints d'étanchéité avant et arrière qui sont interposés entre chaque piston primaire/secondaire et l'alésage, chaque joint d'étanchéité avant délimitant dans l'alésage une chambre d'alimentation arrière primaire/secondaire et une chambre de pression avant primaire/secondaire, le corps comportant deux conduits radiaux d'alimentation qui relient un réservoir extérieur de fluide hydraulique à chaque chambre d'alimentation arrière primaire/secondaire et qui débouche entre les deux joints d'étanchéité associés, le corps comportant un perçage d'alimentation d'un circuit de freinage primaire/secondaire, associé respectivement aux roues avant/arrière du véhicule, qui débouche dans chaque chambre de pression avant primaire/secondaire, chaque piston primaire/secondaire comportant des moyens d'isolation qui, lorsque chaque piston primaire/secondaire est mû axialement vers l'avant vers sa position d'application, est susceptible de franchir le joint d'étanchéité avant pour isoler la chambre de pression avant primaire/secondaire de la chambre d'alimentation arrière primaire/secondaire et permettre ainsi l'établissement d'une pression de freinage dans la chambre de pression avant primaire/secondaire,
chaque circuit de freinage primaire/secondaire du système comportant au moins un frein hydraulique associé,
le système comportant aussi un dispositif électronique de contrôle de stabilité, qui est susceptible de commander indépendamment l'établissement d'une pression hydraulique de freinage dans chaque frein de chaque circuit primaire/secondaire pour exercer un effort de freinage indépendant sur chaque roue associée pour permettre de contrôler la stabilité du véhicule associé,
le système comportant enfin un dispositif d'antiblocage de roues qui est susceptible de commander indépendamment une baisse de pression hydraulique de freinage dans chaque frein de chaque circuit primaire/secondaire pour éviter un blocage des freins associés.

On connaît de nombreux exemples de systèmes de freinage de ce type.

Dans un tel système, le dispositif électronique de contrôle de stabilité n'agit sur les freins des circuits primaire ou secondaire que pour exercer un effort de freinage différentiel, indépendant et d'intensité variable pour chaque frein, qui permet de contrôler la stabilité du véhicule associé.

FR-A-2 620 990 décrit un procédé de contrôle et de commande d'un système de freinage.

Par ailleurs, les récents développements en terme d'habitabilité au sein des véhicules conduit les constructeurs à mettre en oeuvre des dispositions permettant d'augmenter au maximum l'habitabilité disponible à l'intérieur de l'habitacle du véhicule et pour ce faire, une solution consiste principalement à réduire autant que possible la course de la pédale de frein au niveau du poste conducteur.

Il est donc souhaitable de pouvoir disposer d'un maître-cylindre de course réduite, qui présente de surcroît l'avantage de présenter un encombrement réduit dans le compartiment moteur du véhicule automobile associé.

L'invention permet de parvenir à cet objectif en utilisant le dispositif de contrôle de stabilité à la manière d'un système de freinage prenant le relais du maître-cylindre au delà d'une course déterminée de la pédale de frein du véhicule.

Dans ce but, l'invention propose un système de freinage du type décrit précédemment, caractérisé en ce que au moins la chambre de pression qui est associée au circuit secondaire de freinage comporte un capteur de pression et est de longueur réduite pour proposer au piston associé une course de freinage réduite, et en ce que le système comporte des moyens de détection d'une position de proximité de fin de course dudit piston dans ladite chambre qui sont susceptibles d'émettre à l'intention du dispositif électronique de contrôle de stabilité une consigne de freinage pour permettre :
- une première phase de freinage au cours de laquelle le mouvement du piston permet de manière conventionnelle l'établissement d'une pression de freinage dans la chambre de pression avant et dans le circuit associé,
- une deuxième phase de freinage au cours de laquelle, dès lors que le piston occupe sa position de proximité de fin de course, le dispositif électronique de contrôle de stabilité commande l'établissement d'une pression de freinage dans le circuit associé de manière croissante.

Selon d'autres caractéristique de l'invention
- seule la chambre de pression avant d'extrémité du maître-cylindre, qui est associée au circuit secondaire de freinage distribuant une pression hydraulique de freinage aux roues arrière du véhicule, est de longueur réduite,
- les deux chambres de pression avant du maître-cylindre qui sont associées aux circuits primaire et secondaire de freinage sont de longueur réduite,
- les moyens de détection de la proximité de fin de la course du piston comportent le capteur de pression intégré à la chambre de pression du maître-cylindre,
- les moyens de détection de la proximité de fin de course du piston comportent un capteur de déplacement de la pédale actionnant la tige de commande du maître-cylindre,
- dans la deuxième phase de freinage, le dispositif électronique de contrôle de stabilité pilote la consigne de freinage à partir de la pression régnant dans la chambre de pression et selon une croissance qui est fonction d'une information de vitesse de déplacement de la pédale actionnant la tige de commande du maître-cylindre obtenue à l'aide du capteur de déplacement de la pédale actionnant la tige de commande,
- la position de proximité de fin de course du piston associée au capteur de déplacement correspond à une position de fin de course de la pédale de 80 mm.
- les moyens de détection de la proximité de fin de course du piston comportent un interrupteur associé à une position déterminée associée de la pédale actionnant la tige de commande du maître-cylindre.
- dans la deuxième phase de freinage, le dispositif électronique de contrôle de stabilité pilote la consigne de freinage à partir d'une pression régnant dans la chambre de pression qui est associée à une pression de verrouillage du système anti-blocage de roues et selon une croissance prédéterminée,
- la position de proximité de fin de course du piston associée à l'interrupteur correspond à une position de fin de course de la pédale de 85 mm,
- dès lors que, pendant la deuxième phase, la pression dans le circuit associé dépasse une valeur de pression déterminée, le dispositif électronique de contrôle de stabilité est susceptible de successivement :
   - maintenir la pression hydraulique dans le circuit de freinage associé,
   - ramener le piston dans sa position de repos,
   pour permettre des troisième et quatrième phases successives de freinage respectivement analogues au première et deuxième phase de freinage afin d'établir une pression hydraulique supplémentaire dans le circuit.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique d'un premier mode de réalisation d'un système de freinage selon l'invention comportant un premier type de maître-cylindre de type "tandem" représenté dans sa position de repos,
- la figure 2 est une vue schématique du premier mode de réalisation d'un système de freinage selon l'invention comportant le premier type de maître-cylindre de type "tandem" représenté dans sa position de fin de course de son piston,
- la figure 3 est un graphique comparatif représentant la décélération d'un véhicule conventionnel et d'un véhicule équipé d'un système de freinage selon l'invention en fonction de la course du piston,
- la figure 4 est un graphique comparatif représentant la décélération d'un véhicule conventionnel et d'un véhicule équipé d'une variante du système de freinage selon l'invention en fonction de la course du piston,
- la figure 5 d'un second mode de réalisation d'un système de freinage selon l'invention comportant un second type de maître-cylindre de type "tandem" représenté dans sa position de repos,
- la figure 6 est une vue schématique du second mode de réalisation d'un système de freinage selon l'invention comportant le second type de maître-cylindre de type "tandem" représenté dans sa position de fin de course de son piston.

Dans la description qui va suivre, des chiffres de référence identiques désignent des pièces identiques ou ayant des fonctions similaires.

Par convention, les termes "avant" et "arrière", désignent respectivement des éléments ou des positions orientés respectivement vers la droite et la gauche des figures.

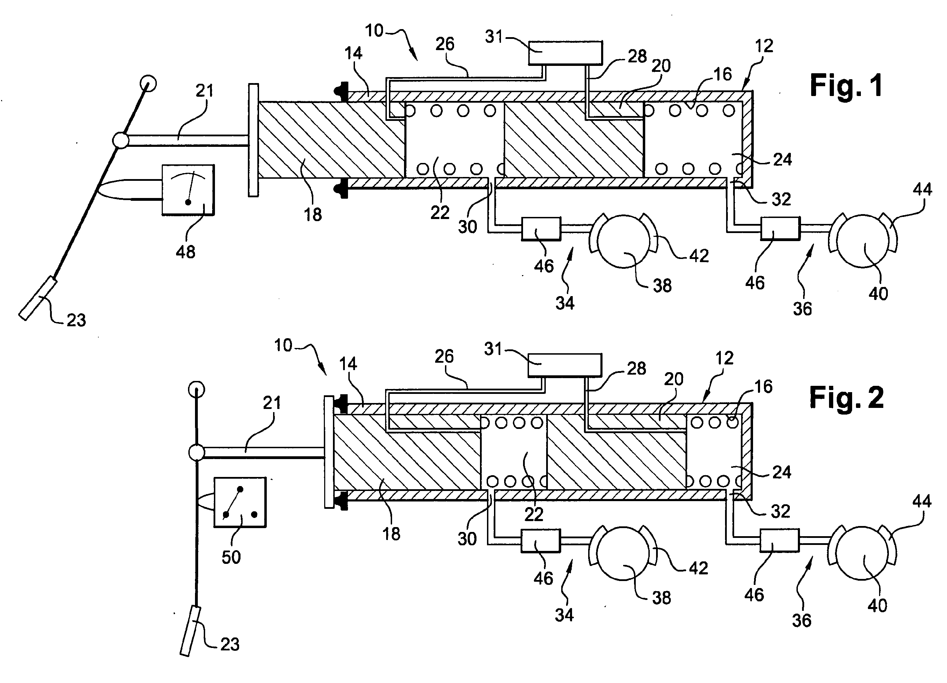

On a représenté de manière schématique sur les figures 1, 2, 5 et 6 un système 10 de freinage pour un véhicule automobile.

De manière connue, le système 10 comprend un maître-cylindre 12 comportant un corps 14 sensiblement axial à l'intérieur d'un alésage 16 duquel sont montés coulissants deux pistons axiaux primaire 18 et secondaire 20.

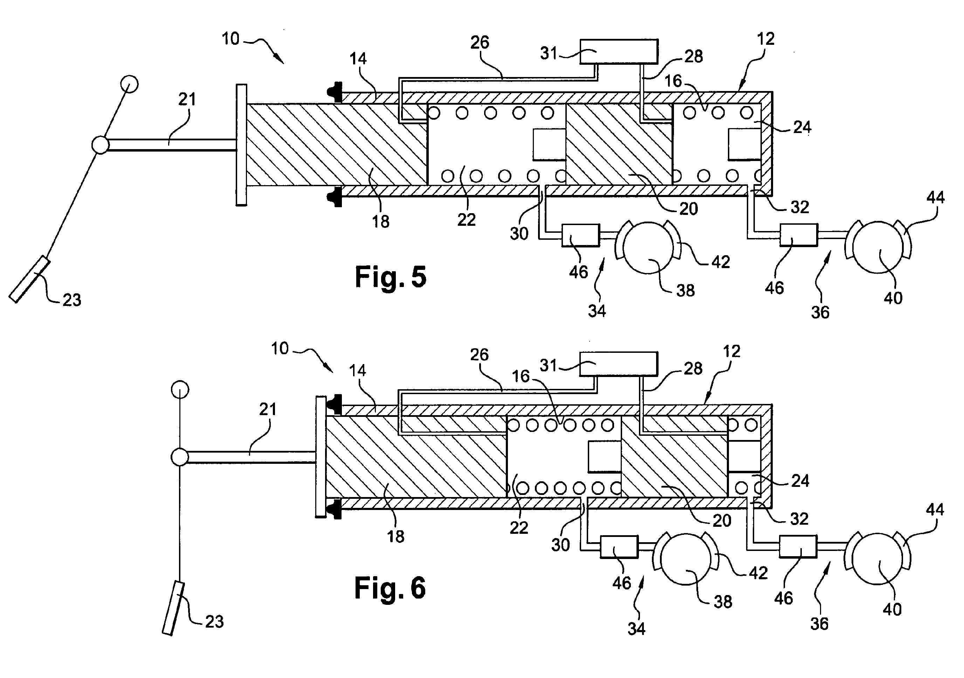

Les pistons axiaux primaire 18 et secondaire 20 sont susceptibles d'être actionnés par une tige 21 de commande reliée à une pédale 23 mue par conducteur du véhicule entre une position arrière de repos, représentée aux figures 1 et 5, et une position avant d'application d'un effort de freinage, représentée aux figures 2 et 6.

De manière connue, les pistons 18, 20 sont rappelés élastiquement vers leur position arrière de repos, et l'alésage comporte deux joints d'étanchéité avant et arrière (non représentés) qui sont interposés entre chaque piston primaire 18 ou secondaire 20 et l'alésage 16.

Chaque joint d'étanchéité avant délimite dans l'alésage une chambre d'alimentation arrière primaire/secondaire associée et une chambre de pression avant primaire 22 ou secondaire 24 dans laquelle est susceptible de s'établir une pression hydraulique de freinage lors de l'avancée du piston primaire 18 ou secondaire 20 associé. A cet effet, chaque piston primaire 18 ou secondaire 20 comporte des moyens d'isolation qui, lorsque chaque piston primaire 18 ou secondaire 20 est mû axialement vers l'avant vers sa position d'application, est susceptible de franchir le joint d'étanchéité avant associé pour isoler la chambre de pression avant primaire 22 ou secondaire 24 de la chambre d'alimentation arrière primaire/secondaire et permettre ainsi l'établissement d'une pression de freinage dans la chambre de pression avant primaire 22 ou secondaire 24.

De manière connue, le corps 14 comporte deux conduits radiaux d'alimentation 26, 28 qui relient un réservoir 31 extérieur de fluide hydraulique à chaque chambre d'alimentation arrière primaire et secondaire, et qui débouchent entre les deux joints d'étanchéité associés, pour alimenter les chambres de pression avant primaire 22 ou secondaire 24.

Cette disposition étant largement connue de l'état de la technique, elle ne fera pas l'objet d'une plus ample description.

Le corps 14 comporte des perçages d'alimentation 30, 32 de circuits de freinage primaire 34 ou secondaire 36, qui sont associés respectivement aux roues avant 38 ou arrière 40 du véhicule. Les roues 38, 40 comportent chacune au moins un frein 42, 44 hydraulique associé destinés à freiner lesdites roues 38, 40. Chaque perçage 30, 32, débouche dans chaque chambre de pression avant primaire 22 ou secondaire 24 pour alimenter chaque circuit 34 ou 36 associé.

Cette disposition est plus particulièrement connue sous le nom de circuit de freinage parallèle.

Par ailleurs, le système 10 comporte un dispositif 46 électronique de contrôle de stabilité, qui est susceptible de commander indépendamment l'établissement d'une pression hydraulique de freinage dans chaque frein 42, 44 de chaque circuit primaire 34 ou secondaire 36 pour exercer un effort de freinage indépendant sur chaque roue 38, 40 afin de permettre de contrôler la stabilité du véhicule associé,

Enfin, le système 10 comporte un dispositif (non représenté) d'antiblocage de roues qui est susceptible de commander indépendamment une baisse de pression hydraulique de freinage dans chaque frein 42, 44 de chaque circuit primaire 34 ou secondaire 36 pour éviter un blocage des freins 42, 44 associés.

Pour pouvoir disposer d'un maître-cylindre 12 de course réduite, qui présente de surcroît l'avantage de présenter un encombrement réduit dans le compartiment moteur du véhicule automobile associé, l'invention utilise le dispositif 46 de contrôle de stabilité à la manière d'un système de freinage prenant le relais du maître-cylindre 12 au delà d'une course déterminée du piston associée à une course déterminée de la pédale 23 de frein du véhicule.

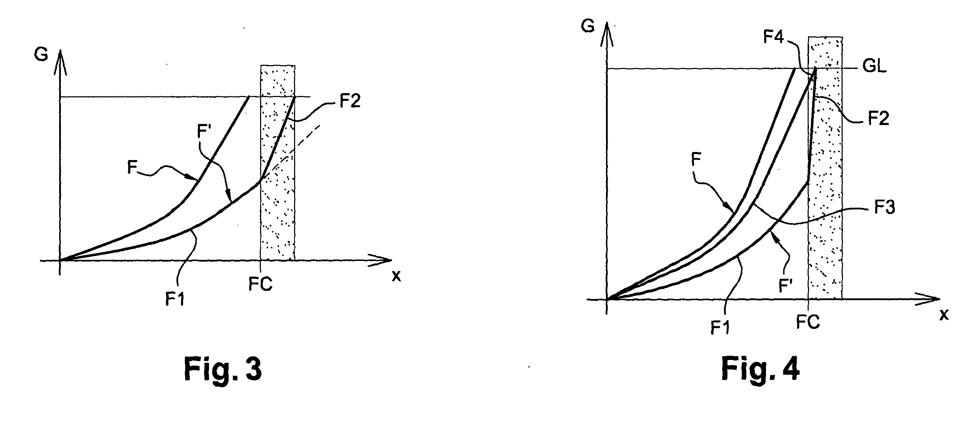

A cet effet, au moins la chambre de pression 24 qui est associée au circuit secondaire 36 de freinage comporte un capteur de pression (non représenté) et est de longueur réduite pour proposer au piston 20 associé une course de freinage réduite, et le système 10 comporte des moyens de détection d'une position de proximité de fin de course dudit piston 20 dans ladite chambre 24 qui sont susceptibles d'émettre à l'intention du dispositif électronique de contrôle (non représenté) de stabilité une consigne de freinage pour permettre :
- une première phase de freinage "F1", représentée à la figure 3, au cours de laquelle le mouvement du piston 20 permet de manière conventionnelle l'établissement d'une pression de freinage dans la chambre de pression avant 24 et dans le circuit 36 associé,
- une deuxième phase de freinage "F2" au cours de laquelle, dès lors que le piston 20 occupe sa position "FC" de proximité de fin de course, le dispositif électronique 46 de contrôle de stabilité commande l'établissement d'une pression de freinage dans le circuit 36 associé.

Les courbes de la figure 3 représentent la décélération "G" obtenue en fonction de la course "x" du piston agencé dans la chambre de pression. La courbe "F" représente la décélération obtenue avec un maître-cylindre conventionnel comportant une chambre de pression de longueur conventionnelle. Dans ce cas, la décélération "G" est obtenue de manière conventionnelle par l'établissement d'une pression hydraulique dans la chambre de pression avant 24 du fait de l'avancée du piston 20 dans ladite chambre 20 suivant toute sa course.

La courbe "F"' représente la décélération obtenue avec un maître-cylindre selon l'invention comportant une chambre de pression de longueur réduite.

Dans ce dernier cas, comme on peut le voir à la figure 3, la courbe "F"' se décompose deux phases successives, à savoir une phase "F1" qui correspond la décélération obtenue de manière conventionnelle par l'établissement d'une pression hydraulique dans la chambre de pression avant 24 du fait de l'avancée du piston 20 dans ladite chambre, puis une phase "F2" qui débute dès lors que les moyens de détection d'une position de proximité de fin de course dudit piston 20 ont détecté que celui-ci a dépassé sa position"FC" de proximité de fin de course.

Au cours de cette phase "F2", le dispositif électronique 46 de contrôle de stabilité relaie le maître-cylindre pour commander de manière indépendante l'établissement d'une pression de freinage dans le circuit 36 associé. A cet effet, le dispositif électronique 46 aspire du fluide hydraulique en provenance du réservoir 31 à travers le joint d'étanchéité avant interposé entre le piston 20 et l'alésage 16.

Selon un premier mode de réalisation qui a été représenté aux figures 5 et 6, seule la chambre de pression avant 24 d'extrémité du maître-cylindre, qui est associée au circuit 36 secondaire de freinage distribuant une pression hydraulique de freinage aux roues arrière du véhicule, est de longueur réduite.

Comme on peut le voir sur la figure 5, la chambre de pression avant 24 associée au circuit 36 secondaire de freinage est de longueur réduite par rapport à la chambre de pression avant 22 qui est associée au circuit 34 primaire de freinage.

La chambre de pression avant 22 permet, quant à elle, d'effectuer un freinage conventionnel à l'aide de circuit 34 de freinage associé aux roues avant du véhicule.

Selon un second mode de réalisation qui a été représenté aux figures 1 et 2, les deux chambres de pressions avant 34 et 36 du maître-cylindre qui sont associées aux circuits primaire et secondaire de freinage sont de longueurs réduites. Il sera compris que les chambres de pression avant 34 et 36 qui ont été représentées aux figures 1 et 2 sont de longueur réduite par rapport à celles d'un maître-cylindre conventionnel (non représenté).

Il convient de noter que, à la différence du premier mode de réalisation de l'invention, ce mode de réalisation peut trouver à s'appliquer à un maître-cylindre 12 relié à un circuit de freinage dit "en X", le circuit de frein 34 alimentant par exemple une roue avant droite et une roue arrière gauche du véhicule, et le circuit de frein 36, 34 alimentant par exemple une roue avant gauche et une roue arrière droite du véhicule.

Dans les deux modes de réalisation de l'invention, les moyens de détection de la proximité de fin de la course du seul piston 20 ou des pistons 18 et 20 peuvent comporter le ou les capteurs (non représenté) de pression intégré à la chambre 24 de pression ou aux chambres de pression 22, 24 du maître-cylindre.

Dans le cas où les deux chambres de pression 22, 24 sont de longueurs réduites, il est possible de n'utiliser qu'un seul moyen de détection de la proximité de fin de course des pistons 18 et 20.

A cet effet, comme l'illustrent la figure 1, les moyens de détection de la proximité de fin de course des pistons 18, 20 peuvent comporter un unique capteur 48 de déplacement de la de la pédale 23 actionnant la tige 21 de commande du maître-cylindre.

Dans cette configuration, dans la deuxième phase "F2" de freinage, le dispositif 46 électronique de contrôle de stabilité pilote la consigne de freinage à partir de la pression régnant dans la chambre de pression, dont l'information est fournie par les capteurs de pression néanmoins présents dans les chambres 22 et 24, et selon une croissance qui est fonction d'une information de vitesse de déplacement de la pédale 23 actionnant la tige 21 de commande du maître-cylindre obtenue à l'aide du capteur 48 de déplacement de pédale 23 actionnant la tige 21 de commande.

Il sera donc compris que la croissance de la pression de freinage au cours de la deuxième phase "F2" résulte d'une extrapolation de la croissance de la pression de freinage au cours de la première phase "F1", croissance dont les caractéristiques sont fournies par les informations issues du capteur de 48 de déplacement.

Dans ce mode de réalisation, la position "FC" de proximité de fin de course du piston associée au capteur 48 de déplacement correspond à une position de fin course de la pédale 23 de 80 mm.

Selon une variante simplifiée qui a été représentée à la figure 2, les moyens de détection de la position "FC" de proximité de fin de course du piston comportent un interrupteur 50 associé à une position déterminée associée de la pédale 23 actionnant la tige 21 de commande du maître-cylindre.

Dans cette configuration, dans la deuxième phase "F2" de freinage, le dispositif 46 électronique de contrôle de stabilité pilote la consigne de freinage à partir d'une pression régnant dans la chambre de pression qui est associée à une pression de verrouillage du système anti-blocage de roues (non représenté) et selon une croissance prédéterminée. La croissance de la pression de freinage s'effectue donc à partir d'une pression de seuil déterminée garantissant le verrouillage du système anti-blocage de roues et de façon prédéterminée, ce qui s'avère satisfaisant à l'usage étant donné que la deuxième phase "F2"de freinage correspond à des freinages d'intensité élevée pour lesquels une modulation n'est pas forcément nécessaire.

Dans ce cas, la position "FC" de proximité de fin de course du piston associée à l'interrupteur 50 correspond à une position de fin de course de la pédale 23 de 85 mm.

Une autre caractéristique particulièrement avantageuse de l'invention est que le système peut aussi avantageusement être utilisé afin de bénéficier d'une pression de freinage supplémentaire.

Comme l'illustre la figure 4, il est en effet possible de prévoir que, dès lors que pendant la deuxième phase "F2", la pression dans le circuit associé dépasse une valeur de pression déterminée, associée par exemple à une décélération limite "GL", le dispositif 46 électronique de contrôle de stabilité est susceptible de successivement :
- maintenir la pression hydraulique dans le circuit de freinage associé,
- ramener le piston dans sa position de repos,
   pour permettre des troisième et quatrième phases "F3" et "F4" successives de freinage respectivement analogues au première et deuxième phases de freinage "F1" et "F2" afin d'établir une pression hydraulique supplémentaire dans le circuit.

La phase "F3" est donc à nouveau une phase conventionnelle permettant de moduler la pression dans le circuit de freinage, et la phase "F4" est donc à nouveau une phase pilotée par dispositif 46 électronique de contrôle de stabilité.

Il est donc ainsi possible d'obtenir des pressions hydrauliques de freinage très élevées tout en bénéficiant d'un maître-cylindre 12 d'encombrement réduit.

L'invention permet donc de bénéficier d'un maître-cylindre 12 d'encombrement réduit et de conserver des caractéristiques de freinage analogues à celles d'un véhicule équipé d'un maître-cylindre conventionnel.

## Revendications

1. Système (10) de freinage pour un véhicule automobile, comprenant un maître-cylindre (12) comportant un corps (14) sensiblement axial à l'intérieur d'un alésage (16) duquel sont montés coulissants deux pistons axiaux primaire (18) et secondaire (20) qui sont susceptibles d'être actionnés par une tige de commande (21) liée à une pédale (23) mue par un conducteur du véhicule entre une position arrière de repos et une position avant d'application d'un effort de freinage, et qui sont rappelés élastiquement vers leur position arrière de repos, l'alésage (16) comportant deux joints d'étanchéité avant et arrière qui sont interposés entre chaque piston primaire (18)/secondaire (20) et l'alésage (16), chaque joint d'étanchéité avant délimitant dans l'alésage (14) une chambre d'alimentation arrière primaire/secondaire et une chambre de pression avant primaire (22)/secondaire (24), le corps (14) comportant deux conduits (26, 28) radiaux d'alimentation qui relient un réservoir extérieur (31) de fluide hydraulique à chaque chambre d'alimentation arrière primaire (22)/secondaire (24) et qui débouche entre les deux joints d'étanchéité associés, le corps (14) comportant un perçage (30, 32) d'alimentation d'un circuit de freinage primaire(34)/secondaire(36), associé respectivement aux roues avant(38)/arrière(40) du véhicule, qui débouche dans chaque chambre de pression avant primaire(22)/secondaire(24), chaque piston primaire(18)/secondaire(20) comportant des moyens d'isolation qui, lorsque chaque piston primaire(18)/secondaire(20) est mû axialement vers l'avant vers sa position d'application, est susceptible de franchir le joint d'étanchéité avant pour isoler la chambre de pression avant primaire(22)/secondaire(24) de la chambre d'alimentation arrière primaire/secondaire et permettre ainsi l'établissement d'une pression de freinage dans la chambre de pression avant primaire(22)/secondaire(24),
chaque circuit de freinage primaire(34)/secondaire(36) du système (10)comportant au moins un frein hydraulique (42, 44) associé,
le système (10) comportant aussi un dispositif (46) électronique de contrôle de stabilité, qui est susceptible de commander indépendamment l'établissement d'une pression hydraulique de freinage dans chaque frein (42, 44) de chaque circuit primaire(34)/secondaire(36) pour exercer un effort de freinage indépendant sur chaque roue (38, 40) associée pour permettre de contrôler la stabilité du véhicule associé,
le système (10)comportant enfin un dispositif d'antiblocage de roues qui est susceptible de commander indépendamment une baisse de pression hydraulique de freinage dans chaque frein (42, 44) de chaque circuit primaire/secondaire pour éviter un blocage des freins (42, 44) associés,
**caractérisé en ce que** au moins la chambre de pression (24) qui est associée au circuit (36) secondaire de freinage comporte un capteur de pression et est de longueur réduite pour proposer au piston (20) associé une course de freinage réduite, et **en ce que** le système (10) comporte des moyens (48, 50)de détection d'une position de proximité de fin de course dudit piston dans ladite chambre qui sont susceptibles d'émettre à l'intention du dispositif (46) électronique de contrôle de stabilité une consigne de freinage pour permettre :
- une première phase (F1) de freinage au cours de laquelle le mouvement du piston (20) permet de manière conventionnelle l'établissement d'une pression de freinage dans la chambre de pression avant (24) et dans le circuit (36) associé,
- une deuxième phase (F2) de freinage au cours de laquelle, dès lors que le piston (20) occupe sa position (FC) de proximité de fin de course, le dispositif (46) électronique de contrôle de stabilité commande l'établissement d'une pression de freinage dans le circuit (36) associé de manière croissante.

2. Système (10) de freinage selon la revendication précédente, **caractérisé en ce que** seule la chambre (24) de pression avant d'extrémité du maître-cylindre (12), qui est associée au circuit secondaire (36) de freinage distribuant une pression hydraulique de freinage aux roues arrière (40) du véhicule, est de longueur réduite.

3. Système (10) de freinage selon la revendication 1, **caractérisé en ce que** les deux chambres de pressions avant (22, 24) du maître-cylindre (12) qui sont associées aux circuits primaire (34) et secondaire (36) de freinage sont de longueur réduite.

4. Système (10) de freinage selon l'une quelconque des revendications précédente, **caractérisé en ce** les moyens de détection de la proximité de fin de la course du piston (18, 20) comportent le capteur de pression intégré à la chambre (22, 24) de pression du maître-cylindre.

5. Système (10) de freinage selon la revendication 3, **caractérisé en ce** les moyens de détection de la proximité de fin de course du piston (18, 20) comportent un capteur (48) de déplacement de la pédale (23) actionnant la tige (21) de commande du maître-cylindre (12).

6. Système (10) de freinage selon la revendication précédente, **caractérisé en ce que**, dans la deuxième phase de freinage (F2), le dispositif (46) électronique de contrôle de stabilité pilote la consigne de freinage à partir de la pression régnant dans la chambre (22, 24) de pression et selon une croissance qui est fonction d'une information de vitesse de déplacement de la pédale (23) actionnant la tige (21) de commande du maître-cylindre obtenue à l'aide du capteur (48) de déplacement de la pédale (23) actionnant la tige (21) de commande.

7. Système (10) de freinage selon l'une des revendications 5 ou 6, **caractérisé en ce que** la position (FC) de proximité de fin de course du piston (18, 20) associée au capteur de déplacement correspond à une position de fin de course de la pédale (23) de 80 mm.

8. Système (10) de freinage selon la revendication 3, **caractérisé en ce que** les moyens de détection de la proximité de fin de course du piston (18, 20) comportent un interrupteur (50) associé à une position déterminée associée de la pédale (23) actionnant la tige (21) de commande du maître-cylindre (12).

9. Système (10) de freinage selon la revendication précédente, **caractérisé en ce que**, dans la deuxième phase de freinage (F2), le dispositif (46) électronique de contrôle de stabilité pilote la consigne de freinage à partir d'une pression régnant dans la chambre (22, 24) de pression qui est associée à une pression de verrouillage du système anti-blocage de roues et selon une croissance prédéterminée.

10. Système (10) de freinage selon l'une des revendications 5 ou 6, **caractérisé en ce que** la position (FC) de proximité de fin de course du piston (18, 20) associée à l'interrupteur (50) correspond à une positon (FC) de fin de course de la pédale (23) de 85 mm.

11. Système (10) de freinage selon l'une quelconque des revendications précédentes, **caractérisé en ce que** dès lors que, pendant la deuxième phase (F2), la pression dans le circuit associé dépasse une valeur de pression déterminée, le dispositif (46) électronique de contrôle de stabilité est susceptible de successivement :
- maintenir la pression hydraulique dans le circuit (34, 36) de freinage associé,
- ramener le piston (18, 20) dans sa position de repos,
pour permettre des troisième et quatrième phases (F3, F4) successives de freinage respectivement analogues au première et deuxième phases (F1, F2) de freinage afin d'établir une pression hydraulique supplémentaire dans le circuit (34, 36).

## Claims

1. Motor vehicle braking system (10) comprising a master cylinder (12) including a substantially axial body (14) inside a bore (16) of which there are slidably mounted two axial pistons, a primary one (18) and a secondary one (20), which are able to be actuated by a control rod (21) linked to a pedal (23) moved by a driver of the vehicle between a rear rest position and a forward position of applying a braking force, and which are elastically returned to their rear rest position, the bore (16) including two seals, these being a front seal and a rear seal, which are interposed between each primary (18)/secondary (20) piston and the bore (16), each front seal delimiting in the bore (14) a primary/secondary rear supply chamber and a primary (22)/secondary (24) front pressure chamber, the body (14) comprising two radial supply ducts (26, 28) which connect an external hydraulic-fluid reservoir (31) to each primary (22)/secondary (24) rear supply chamber and which open between the two associated seals, the body (14) including a supply drilling (30, 32) supplying a primary (34)/secondary (36) braking circuit associated respectively with the front (38)/rear (40) wheels of the vehicle, which opens into each primary (22)/secondary (24) front pressure chamber, each primary (18)/secondary (20) piston comprising isolating means which, when each primary (18)/secondary (20) piston is moved axially forwards towards its force-applying position, is capable of passing the front seal in order to isolate the primary (22)/secondary (24) front pressure chamber from the primary/secondary rear supply chamber and thus allow a braking pressure to become established in the primary (22)/secondary (24) front pressure chamber,
each primary (34)/secondary (36) braking circuit of the system (10) comprising at least one associated hydraulic brake (42, 44),
the system (10) also including an electronic stability control device (46) which is able independently to command the establishing of a hydraulic braking pressure in each brake (42, 44) of each primary (34)/secondary (36) circuit in order to apply an independent braking force to each associated wheel (38, 40) in order to make it possible to control the stability of the associated vehicle,
the system (10) finally comprising an anti-lock braking device which is able independently to command a drop in hydraulic braking pressure in each brake (42, 44) of each primary/secondary circuit in order to prevent the associated brakes (42, 44) from locking up,
**characterized in that** at least the pressure chamber (24) that is associated with the secondary braking circuit (36) comprises a pressure sensor and is of a reduced length so as to give the associated piston (20) a reduced braking travel, and **in that** the system (10) comprises means (48, 50) of detecting that the said piston is in a position near to the end of its travel in the said chamber, which means are capable of emitting for the benefit of the electronic stability control device (46) a braking instruction in order to allow:
- a first braking phase (F1) during which the movement of the piston (20) allows a braking pressure to be established in the conventional way in the front pressure chamber (24) and in the associated circuit (36),
- a second braking phase (F2) during which, as soon as the piston (20) is in its position (FC) near the end of its travel, the electronic stability control device (46) commands the establishing of an increasing braking pressure in the associated circuit (36).

2. Braking system (10) according to the preceding claim, **characterized in that** only the front pressure chamber (24) at the end of the master cylinder (12), which chamber is associated with the secondary braking circuit (36) distributing a hydraulic braking pressure to the rear wheels (40) of the vehicle, is of reduced length.

3. Braking system (10) according to Claim 1, **characterized in that** the two front pressure chambers (22, 24) of the master cylinder (12) which are associated with the primary (34) and secondary (36) braking circuits are of reduced length.

4. Braking system (10) according to any one of the preceding claims, **characterized in that** the means of detecting that the piston (18, 20) is near the end of its travel comprise the pressure sensor incorporated into the master cylinder pressure chamber (22, 24).

5. Braking system (10) according to Claim 3, **characterized in that** the means for detecting that the piston (18, 20) is near the end of its travel comprise a displacement sensor (48) sensing the displacement of the pedal (23) that actuates the control rod (21) used to control the master cylinder (12).

6. Braking system (10) according to the preceding claim, **characterized in that**, in the second braking phase (F2), the electronic stability control device (46) governs the braking instruction on the basis of the pressure obtaining in the pressure chamber (22, 24) and in accordance with an increase which is a function of a data item relating to the rate of displacement of the pedal (23) actuating the control rod (21) used to control the master cylinder, which data item is obtained from the sensor (48) that senses the displacement of the pedal (23) that actuates the control rod (21).

7. Braking system (10) according to one of Claims 5 and 6, **characterized in that** the position (FC) associated with the displacement sensor relating to the proximity of the piston (18, 20) to the end of its travel, corresponds to a position in which the pedal (23) has completed a travel of 80 mm.

8. Braking system (10) according to Claim 3, **characterized in that** the means for detecting that the piston (18, 20) is near the end of its travel comprise a breaker switch (50) associated with an associated determined position of the pedal (23) that actuates the control rod (21) used to control the master cylinder (12).

9. Braking system (10) according to the preceding claim, **characterized in that** in the second braking phase (F2) the electronic stability control device (46) governs the braking instruction on the basis of a pressure obtaining in the pressure chamber (22, 24), which pressure is associated with a locking pressure of the anti-lock braking system and with a predetermined increase.

10. Braking system (10) according to one of Claims 5 and 6, **characterized in that** the position (FC) associated with the breaker switch (50) relating to the proximity of the piston (18, 20) to the end of its travel, corresponds to a position (FC) in which the pedal (23) has completed a travel of 85 mm.

11. Braking system (10) according to any one of the preceding claims, **characterized in that** once, during the second phase (F2), the pressure in the associated circuit exceeds a predetermined pressure value, the electronic stability control device (46) is liable in succession:
- to maintain the hydraulic pressure in the associated braking circuit (34, 36),
- to return the piston (18, 20) to its rest position,
in order to allow third and fourth successive braking phases (F3, F4) which are respectively analogous to the first and second braking phases (F1, F2) to take place in order to establish an additional hydraulic pressure in the circuit (34, 36).

## Patentansprüche

1. Bremssystem (10) für ein Kraftfahrzeug, mit einem Hauptzylinder (12), der einen im Wesentlichen axialen Körper (14) aufweist, wobei in einer Öffnung (16) des Körpers ein axialer Primärkolben (18) und ein axialer Sekundärkolben (20) gleitend angebracht sind, die über eine Steuerstange (21) betätigt werden können, welche mit einem Pedal (23) verbunden ist, das von einem Fahrer des Fahrzeugs zwischen einer hinteren Ruhestellung und einer vorderen Stellung zum Aufbringen einer Bremskraft bewegt wird, und die elastisch in ihre hintere Ruhestellung zurückgestellt werden, wobei die Öffnung (16) zwei vordere und hintere Dichtungen aufweist, die zwischen dem Primärkolben (18)/ Sekundärkolben (20) und der Öffnung (16) angeordnet sind, wobei jede vordere Dichtung in der Öffnung (16) eine primäre hintere Versorgungskammer/ sekundäre hintere Versorgungskammer und eine primäre vordere Druckkammer (22)/sekundäre vordere Druckkammer (24) begrenzt, wobei der Körper (14) zwei radiale Versorgungsleitungen (26, 28) aufweist, die einen äußeren Hydraulikfluidbehälter (31) mit jeder der primären hinteren Versorgungskammer (22) und sekundären hinteren Versorgungskammer (24) verbinden und zwischen den beiden zugeordneten Dichtungen ausmünden, wobei der Körper (14) eine Bohrung (30, 32) zur Versorgung eines primären Bremskreises (34) und sekundären Bremskreises (36) aufweist, die den vorderen Fahrzeugrädern (38) bzw. den hinteren Fahrzeugrädern (40) zugeordnet ist und in jede der primären vorderen Druckkammer (22) und sekundären vorderen Druckkammer (24) ausmündet, wobei der Primärkolben (18) und der Sekundärkolben (20) Trennmittel aufweisen, die bei einer axialen Bewegung des Primärkolbens (18) und des Sekundärkolbens (20) nach vorne in ihre Stellung zum Aufbringen die vordere Dichtung überwinden können, um die primäre vordere Druckkammer (22)/sekundäre vordere Druckkammer (24) von der primären hinteren Versorgungskammer/sekundären hinteren Versorgungskammer zu trennen und somit den Aufbau eines Bremsdrucks in der primären vorderen Druckkammer (22)/sekundären vorderen Druckkammer (24) zu ermöglichen,
wobei der primäre Bremskreis (34) und der sekundäre Bremskreis (36) des Systems (10) mindestens eine zugeordnete hydraulische Bremse (42, 44) aufweisen,
wobei das System (10) auch eine elektronische Vorrichtung (46) zur Stabilitätskontrolle aufweist, die auf unabhängige Weise den Aufbau eines hydraulischen Bremsdrucks in jeder Bremse (42, 44) des Primärkreises (34) und des Sekundärkreises (36) steuern kann, um eine unabhängige Bremskraft auf jedes zugeordnete Rad (38, 40) auszuüben und die Stabilität des zugeordneten Fahrzeugs kontrollieren zu können,
wobei das System (10) schließlich eine Räder-Antiblockiervorrichtung aufweist, die auf unabhängige Weise in jeder Bremse (42, 44) des Primärkreises und des Sekundärkreises eine Senkung des hydraulischen Bremsdrucks steuern kann, um eine Blockierung der zugeordneten Bremsen (42, 44) zu verhindern,
**dadurch gekennzeichnet, dass** zumindest die einem sekundären Bremskreis (36) zugeordnete Druckkammer (24) einen Drucksensor aufweist und eine verringerte Länge hat, um dem zugeordneten Kolben (20) einen verringerten Bremsweg zu bieten, und das System (10) Mittel (48, 50) zur Erfassung einer Stellung nahe der Endstellung des Kolbens in der Kammer aufweist, die eine Bremsanweisung für die elektronische Vorrichtung (46) zur Stabilitätskontrolle ausgeben können, um Folgendes zu ermöglichen:
- eine erste Bremsphase (F1), in der die Bewegung des Kolbens (20) auf herkömmliche Weise den Aufbau eines Bremsdrucks in der vorderen Druckkammer (24) und in dem zugeordneten Kreis (36) ermöglicht,
- eine zweite Bremsphase (F2), in der die elektronische Vorrichtung (46) zur Stabilitätskontrolle zunehmend den Aufbau eines Bremsdrucks in dem zugeordneten Kreis (36) steuert, sobald der Kolben (20) seine Stellung (FC) nahe der Endstellung erreicht.

2. Bremssystem (10) nach dem vorhergehenden Anspruch, **dadurch gekennzeichnet, dass** nur die vordere Druckkammer (24) am Ende des Hauptzylinders (12), die dem sekundären Bremskreis (36) zugeordnet ist, der einen hydraulischen Bremsdruck zu den hinteren Fahrzeugrädern (40) leitet, eine verringerte Länge hat.

3. Bremssystem (10) nach Anspruch 1, **dadurch gekennzeichnet, dass** die beiden vorderen Druckkammern (22, 24) des Hauptzylinders (12), die dem primären Bremskreis (34) und dem sekundären Bremskreis (36) zugeordnet sind, eine verringerte Länge haben.

4. Bremssystem (10) nach einem der vorhergehenden Ansprüche, **dadurch gekennzeichnet, dass** die Mittel zur Erfassung der Nähe der Endstellung des Kolbens (18, 20) den in der Druckkammer (22, 24) des Hauptzylinders integrierten Drucksensor aufweisen.

5. Bremssystem (10) nach Anspruch 3, **dadurch gekennzeichnet, dass** die Mittel zur Erfassung der Nähe der Endstellung des Kolbens (18, 20) einen Sensor (48) zur Erfassung der Verlagerung des Pedals (23) aufweisen, das die Stange (21) zur Steuerung des Hauptzylinders (12) betätigt.

6. Bremssystem (10) nach dem vorhergehenden Anspruch, **dadurch gekennzeichnet, dass** in der zweiten Bremsphase (F2) die elektronische Vorrichtung (46) zur Stabilitätskontrolle die Bremsanweisung ausgehend von dem in der Druckkammer (22, 24) herrschenden Druck und gemäß einem Anstieg ansteuert, der von einer Information über die Verlagerungsgeschwindigkeit des Pedals (23), das die Stange (21) zur Steuerung des Hauptzylinders betätigt, abhängig ist, wobei die Information mit Hilfe des Sensors (48) zur Erfassung der Verlagerung des Pedals (23), das die Steuerstange (21) betätigt, erhalten wird.

7. Bremssystem (10) nach Anspruch 5 oder 6, **dadurch gekennzeichnet, dass** die Stellung (FC) nahe der Endstellung des Kolbens (18, 20), die dem Verlagerungssensor zugeordnet ist, einer Endstellung des Pedals (23) von 80 mm entspricht.

8. Bremssystem (10) nach Anspruch 3, **dadurch gekennzeichnet, dass** die Mittel zur Erfassung der Nähe der Endstellung des Kolbens (18, 20) einen Schalter (50) aufweisen, der einer vorbestimmten Stellung zugeordnet ist, die dem Pedal (23) zugeordnet ist, das die Stange (21) zur Steuerung des Hauptzylinders (12) betätigt.

9. Bremssystem (10) nach dem vorhergehenden Anspruch, **dadurch gekennzeichnet, dass** in der zweiten Bremsphase (F2) die elektronische Vorrichtung (46) zur Stabilitätskontrolle die Bremsanweisung ausgehend von einem in der Druckkammer (22, 24) herrschenden Druck, der einem Druck zur Verriegelung des Räder-Antiblockiersystems zugeordnet ist, und mit einem vorbestimmten Anstieg ansteuert.

10. Bremssystem (10) nach Anspruch 5 oder 6, **dadurch gekennzeichnet, dass** die Stellung (FC) nahe der Endstellung des Kolbens (18, 20), die dem Schalter (50) zugeordnet ist, einer Endstellung (FC) des Pedals (23) von 85 mm entspricht.

11. Bremssystem (10) nach einem der vorhergehenden Ansprüche, **dadurch gekennzeichnet, dass** die elektronische Vorrichtung (46) zur Stabilitätskontrolle, sobald in der zweiten Phase (F2) der Druck in dem zugeordneten Kreis einen vorbestimmten Druckwert überschreitet, nacheinander Folgendes durchführen kann:
- Beibehalten des hydraulischen Drucks in dem zugeordneten Bremskreis (34, 36),
- Zurückstellen des Kolbens (18, 20) in seine Ruhestellung,
um analog zur ersten und zweiten Bremsphase (F1, F2) eine dritte und eine vierte Bremsphase (F3, F4), die aufeinander folgen, zu ermöglichen und einen zusätzlichen hydraulischen Druck in dem Kreis (34, 36) aufzubauen.
